# EUROPEAN PATENT SPECIFICATION

(11) **EP 4 610 594 B1**
(45) Date of publication and mention of the grant of the patent: **07.10.2026**
(21) Application number: 24223081.1
(22) Date of filing: 23.12.2024
(51) Int. Cl.: G01C 19/5712, G01P 15/125, G01P 15/08

(54) **SENSOR AND ELECTRONIC DEVICE**
SENSOR UND ELEKTRONISCHE VORRICHTUNG
CAPTEUR ET DISPOSITIF ÉLECTRONIQUE

(30) Priority: 19.01.2024 JP 2024006991
(43) Date of publication of application: 03.09.2025
(73) Proprietor: Kabushiki Kaisha Toshiba, Minato-ku Tokyo (JP)
(72) Inventor: HIDEAKI, Murase, Tokyo (JP); DAIKI, Ono, Tokyo (JP); YASUSHI, Tomizawa, Tokyo (JP)
(74) Representative: Marks & Clerk LLP

(56) References cited:
- US-A1- 2019 257 655
- US-A1- 2020 363 205

## Description

### FIELD

Embodiments described herein relate generally to a sensor and an electronic device.

### BACKGROUND

For example, there are sensors using MEMS (Micro Electro Mechanical Systems) elements. It is desired to improve the accuracy of sensors.

US2020/363205A1 relates to a sensor that includes a movable member, first, and second counter electrodes, first, and second resistances, and a control device. The movable member includes first and second electrodes and is capable of vibrating. The vibration of the movable member includes first and second components. The first component is along a first direction. The second component is along a second direction crossing the first direction. The first counter electrode opposes the first electrode. The second counter electrode opposes the second electrode. The first resistance includes first and first other end portions. The second resistance includes a second end portion and a second other end portion. The first other end portion is electrically connected to the first counter electrode. The second other end portion is electrically connected to the second counter electrode. The control device includes a controller configured to perform at least a first operation.

### SUMMARY

The invention provides a sensor of claim 1 and an electronic device of claim 13.

### BRIEF DESCRIPTION OF THE DRAWINGS

FIG. 1 is a schematic diagram illustrating a sensor according to a first embodiment;
FIGS. 2A and 2B are schematic vies illustrating a part of the sensor according to the first embodiment;
FIG. 3 is a graph illustrating the characteristics of the sensor;
FIG. 4 is a schematic diagram illustrating an electronic device according to a second embodiment;
FIGS. 5A to 5H are schematic views illustrating applications of the electronic device according to the embodiment; and
FIGS. 6A and 6B are schematic views illustrating applications of the sensor according to the embodiment.

### DETAILED DESCRIPTION

According to one embodiment, a sensor includes an element section and a circuit section. The element section includes a base including a base face, a fixed portion fixed to the base face, a movable portion supported by the fixed portion, a first gap being provided between the base face and the movable portion, and a plurality of fixed electrodes fixed to the base face and facing the movable portion. The plurality of fixed electrodes includes a first electrode and a second electrode. A first direction from the fixed portion to the first electrode is along a first plane along the base face. A second direction from the fixed portion to the second electrode is along the first plane and is inclined with respect to the first direction. The circuit section includes a first charge amplifier and a second charge amplifier. The first charge amplifier includes a first operational amplifier including a first inverting input and a first non-inverting input. The first inverting input is electrically connected to the first electrode. The first non-inverting input is set to a first potential. The second charge amplifier includes a second operational amplifier including a second inverting input and a second non-inverting input. The second inverting input is electrically connected to the second electrode. The second non-inverting input is set to a second potential different from the first potential. The circuit section is configured to detect an angular velocity of an external force applied to the element section by processing a change in a vibration state of the movable portion due to the external force using a first value based on a first output of the first charge amplifier and a second output of the second charge amplifier.

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously or illustrated in an antecedent drawing are marked with like reference numerals, and a detailed description is omitted as appropriate.

### (First Embodiment)

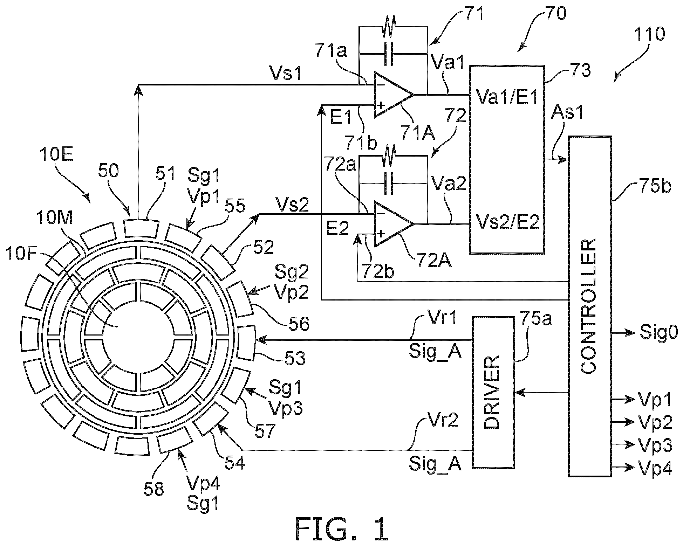

FIG. 1 is a schematic diagram illustrating a sensor according to a first embodiment.

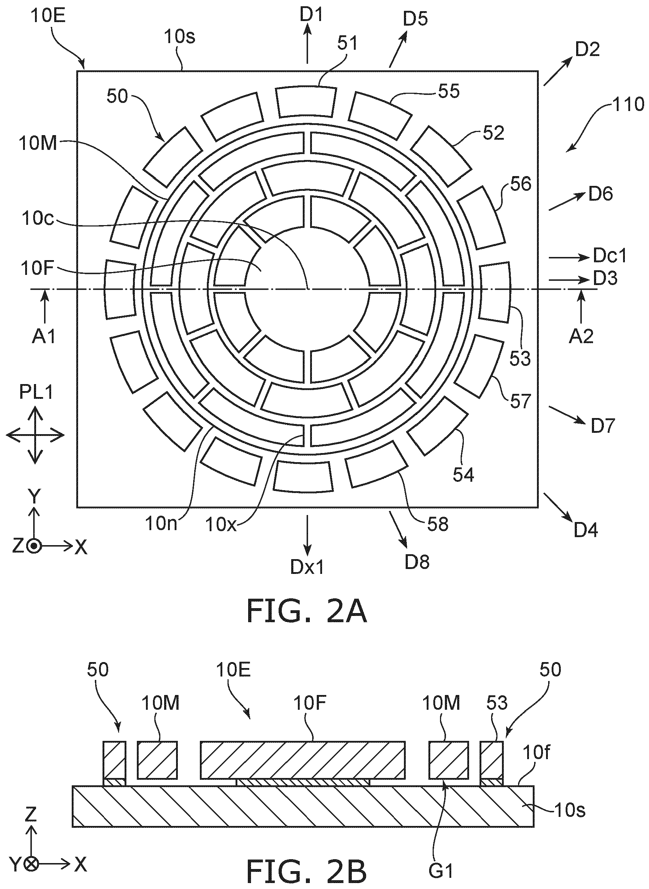

FIGS. 2A and 2B are schematic vies illustrating a part of the sensor according to the first embodiment.

FIG. 2A is a plan view. FIG. 2B is a sectional view taken along the line A1-A2 in FIG. 2A.

As shown in FIG. 1, a sensor 110 according to the embodiment includes an element section 10E and a circuit section 70 (for example, circuitry).

FIGS. 2A and 2B illustrate the element section 10E. The element section 10E includes a base 10s, a fixed portion 10F, a movable portion 10M, and a plurality of fixed electrodes 50. The base 10s includes a base face 10f.

The fixed portion 10F is fixed to the base face 10f. The movable portion 10M is supported by the fixed portion 10F. A first gap G1 is provided between the base face 10f and the movable portion 10M. The plurality of fixed electrodes 50 are fixed to the base face 10f. The plurality of fixed electrodes 50 face the movable portion 10M. The movable portion 10M is electrically conductive.

As shown in FIG. 2A, the plurality of fixed electrodes 50 include, for example, a first electrode 51 and a second electrode 52. The plurality of fixed electrodes 50 may further include other electrodes such as a third electrode 53 and a fourth electrode 54. A first direction D1 from the fixed portion 10F to the first electrode 51 is along a first plane PL1. The first plane PL1 is along the base face 10f. A second direction D2 from the fixed portion 10F to the second electrode 52 is along the first plane PL1. The second direction D2 is inclined with respect to the first direction D1.

A direction perpendicular to the base face 10f is defined as a Z-axis direction. One direction perpendicular to the Z-axis direction is defined as an X-axis direction. A direction perpendicular to the Z-axis direction and the X-axis direction is defined as a Y-axis direction. The first plane PL1 is along the X-Y plane.

The movable portion 10M is provided, for example, between the fixed portion 10F and the first electrode 51 and between the fixed portion 10F and the second electrode 52. The movable portion 10M is provided, for example, between the fixed portion 10F and the third electrode 53, and between the fixed portion 10F and the fourth electrode 54.

The movable portion 10M is provided around the fixed portion 10F along the first plane PL1. At least a part of the movable portion 10M is annular. For example, the movable portion 10M includes a plurality of annular portions 10n concentrically centered around the fixed portion 10F.

In this example, the movable portion 10M further includes a radial portion 10x. The radial portion 10x is continuous with at least two of the plurality of annular portions 10n. The radial portion 10x extends along a first radial direction Dx1 along the first plane PL1. The first radial direction Dx1 passes through a center 10c of the fixed portion 10F in the first plane PL1. The movable portion 10M of the element section 10E is, for example, disk-shaped.

In the element section 10E, an AC signal (AC voltage) is applied to at least one of the plurality of fixed electrodes 50. The movable portion 10M vibrates by the AC signal. When an external force is applied to the movable portion 10M being vibrating, the vibration state changes depending on the external force. By detecting changes in the vibration state, the angular velocity of the external force is detected. The sensor 110 is, for example, a disk-type gyro sensor. In the sensor 110, detection is performed using the resonance state of the movable portion 10M. The sensor 110 is, for example, a disk resonant gyro sensor.

The circuit section 70 is configured to detect the vibration state of the movable portion 10M. As shown in FIG. 1, the circuit section 70 includes a first charge amplifier 71 and a second charge amplifier 72. These charge amplifiers are, for example, sense amplifiers.

The first charge amplifier 71 includes a first operational amplifier 71A. The first operational amplifier 71A includes a first inverting input 71a and a first non-inverting input 71b. The first inverting input 71a is electrically connected to the first electrode 51. The first non-inverting input 71b is set to a first potential E1.

The second charge amplifier 72 includes a second operational amplifier 72A. The second operational amplifier 72A includes a second inverting input 72a and a second non-inverting input 72b. The second inverting input 72a is electrically connected to the second electrode 52. The second non-inverting input 72b is set to a second potential E2. The second potential E2 is different from the first potential E1.

The circuit section 70 is configured to detect an angular velocity of the external force by processing (for example, correcting) a change in the vibration state of the movable portion 10M due to an external force applied to the element section 10E using a first value As1 based on the first output Va1 of the first charge amplifier 71 and a second output Va2 of the second charge amplifier 72.

In the embodiment, the non-inverting inputs of the first operational amplifier 71A and the second operational amplifier 72A, which function as sense amplifiers, are set to different potentials. By setting the two non-inverting inputs to different potentials, different voltages are applied to the two electrodes. Thereby, for example, correction of vibrational conditions can be possible by the different voltages. Thereby, high accuracy can be obtained. According to the embodiment, a sensor that can improve detection accuracy can be provided.

As shown in FIG. 1, the circuit section 70 further includes a processing circuit 73. The processing circuit 73 is configured to output a first ratio and a second ratio. The first ratio is a ratio (Va1/E1) of the first output Va1 to the first potential E1. The second ratio is a ratio of the second output Va2 to the second potential E2. The first value As1 is, for example, a function of the first ratio and the second ratio. For example, the signal obtained from the first electrode 51 and the signal obtained from the second electrode 52 may be synchronously detected based on the frequency of the signals. For example, the phase angle φ with respect to the reference signal can be obtained by synchronous detection. The function may include a cosine component and a sine component of the phase angle φ1 in the first direction D1, and a cosine component and a sine component of the phase angle φ2 in the second direction D2 (see FIG. 2A).

In the embodiment, as described above, the two non-inverting inputs are set to mutually different potentials (first potential E1 or second potential E2). At this time, the first output Va1 of the first operational amplifier 71A is corrected by the first potential E1. The second output Va2 of the second operational amplifier 72A is corrected by the second potential E2. By using the detection result (first value As1) obtained from the corrected value, the desired angular velocity can be appropriately detected.

As already described, the plurality of fixed electrodes 50 further include the third electrode 53 and the fourth electrode 54. As shown in FIG. 2A, a third direction D3 from the fixed portion 10F to the third electrode 53 is along the first plane PL1. A fourth direction D4 from the fixed portion 10F to the fourth electrode 54 is along the first plane PL1. The fourth direction D4 crosses the third direction D3.

As shown in FIG. 1, the circuit section 70 may further include a first circuit 75a. The first circuit 75a is configured to supply an AC signal Sig_A to at least one of the third electrode 53 and the fourth electrode 54 to vibrate the movable portion 10M. In this example, the first circuit 75a supplies a first drive signal Vr1 to the third electrode 53. The first circuit 75a supplies a second drive signal Vr2 to the fourth electrode 54. The first drive signal Vr1 and the second drive signal Vr2 are included in the AC signal Sig_A.

The third electrode 53 and the fourth electrode 54 are drive electrodes. The first circuit 75a is a driver. The first circuit 75a generates a desired vibration in the movable portion 10M. A parallel electrode pair is formed by the plurality of fixed electrodes 50 and the movable portion 10M. Vibration is obtained by electrostatic force in the parallel electrode pair including the third electrode 53 and the fourth electrode 54. A signal (voltage) based on vibration is obtained by the electrostatic force in the parallel electrode pair including the first electrode 51 and the second electrode 52.

As shown in FIG. 1, the circuit section 70 may further include a second circuit 75b. The second circuit 75b is configured to control the first circuit 75a based on the first value As1 so as to return the vibration state of the movable portion 10M to the state when no external force is applied. The second circuit 75b is, for example, a controller.

For example, in a first vibration state in which no external force is applied to the element section 10E, the movable portion 10M vibrates along the first vibration direction. In the second vibration state in which an external force is applied to the element section 10E, the vibration state of the movable portion 10M includes a component in the second vibration direction crossing the first vibration direction. For example, the second vibration direction is orthogonal to the first vibration direction. These vibration directions may be any direction along the first plane PL1. The change in the vibration state due to external force may be based on Coriolis force, for example.

For example, the circuit section 70 uses the first value As1 (a value based on the output from the sensor amplifier) to adjust the AC signal Sig_A so as to return the second vibration state to the first vibration state. For example, the circuit section 70 (second circuit 75b) detects the angular velocity based on a change in the AC signal Sig_A for adjustment.

The second circuit 75b may be configured to output a detection result signal Sig0 regarding the detected angular velocity.

The second circuit 75b may supply the first potential E1 to the first non-inverting input 71b. The second circuit 75b may supply the second potential E2 to the second non-inverting input 72b. The second circuit 75b may control the power supply circuit to cause the power supply circuit to supply the first potential E1 to the first non-inverting input 71b. The second circuit 75b may control the power supply circuit to cause the power supply circuit to supply the second potential E2 to the second non-inverting input 72b.

In the embodiment, the third direction D3 may be inclined with respect to the first direction D1. The fourth direction D4 may be inclined with respect to the third direction D3.

In one example of the embodiment, the first potential E1 is 1V. The second potential E2 is 4V. In one example, the second potential E2 is 1.5 times or more the first potential E1.

In the embodiment, for example, a ratio of an absolute value of a difference between the first potential E1 and the second potential E2 to the first potential E1 may be 0.1 or more. For example, the first potential E1 and the second potential E2 are positive. For example, the first potential E1 is lower than the second potential E2. For example, the first ratio (Va1/E1) is higher than the second ratio (Va2/E2).

The circuit section 70 may be configured to vibrate the movable portion 10M along the first direction D1 when no external force is applied to the element section 10E.

For example, a method of adjusting vibration characteristics using electrostatic force can be considered. In this case, nonlinearity is likely to occur in the vibration direction (first vibration direction). In the vibration direction, detection sensitivity may be low. On the other hand, in the angular velocity detection direction (second vibration direction) orthogonal to the vibration direction, practical problems regarding nonlinearity are unlikely to occur. In the direction perpendicular to the vibration direction (angular velocity detection direction), it is preferable that the detection sensitivity is high. When the potential of the non-inverting input of the sense amplifier is high, the detection sensitivity become high.

In the embodiment, for example, the vibration direction is set in a direction of an electrode with a lower potential. Thereby, it becomes easy to obtain high sensitivity in detecting angular velocity. Nonlinearity of the vibration of the movable portion 10M is suppressed, and high accuracy is easily obtained.

In the embodiment, the movable portion 10M has a first resonance mode and a second resonance mode. A ratio of an absolute value of a difference between the first resonant frequency of the first resonant mode and the second resonant frequency of the second resonant mode to the first resonant frequency is 0.001 or less. For example, resonant frequencies in two different directions are matched. The sensor 110 is, for example, a mode matching gyro sensor.

For example, in a mode matching gyro sensor, the asymmetry of the resonant frequency is adjusted by electrostatic force. In the adjustment using electrostatic force, the vibration state of the movable portion 10M may become unstable due to nonlinearity. This may deteriorate the detection accuracy of angular velocity. In embodiments, the potential of the non-inverting input of the sense amplifier is used for adjustment. Thereby, adjustment using electrostatic force and optimization of the vibration direction can be performed. Angular velocity can be detected with high accuracy.

In the embodiment, adjustment by electrostatic force may be further performed. As shown in FIG. 1, the plurality of fixed electrodes 50 may further include a fifth electrode 55 and a sixth electrode 56. As shown in FIG. 2A, a fifth direction D5 from the fixed portion 10F to the fifth electrode 55 is along the first plane PL1. A sixth direction D6 from the fixed portion 10F to the sixth electrode 56 is along the first plane PL1. The sixth direction D6 crosses the fifth direction D5. In this example, the sixth direction D6 is inclined with respect to the fifth direction D5.

The circuit section 70 is configured to supply a first signal Sg1 to at least one of the fifth electrode 55 or the sixth electrode 56 to adjust the vibration state. The first signal Sg1 is an adjustment voltage. In this example, the circuit section 70 supplies a first adjustment voltage Vp1 to the fifth electrode 55. The circuit section 70 supplies a second adjustment voltage Vp2 to the sixth electrode 56.

For example, the circuit section 70 may be configured to supply the first signal Sg1 such that the difference between the vibration characteristic of the movable portion 10M in the vibration state in the first direction D1 and the vibration characteristic of the movable portion 10M in the vibration state in the first crossing direction Dc1 is reduced. The first crossing direction Dc1 crosses the first direction D1.

As shown in FIG. 1, the plurality of fixed electrodes 50 may include the fifth electrode 55, the sixth electrode 56, a seventh electrode 57, and an eighth electrode 58. As shown in FIG. 2A, the fifth direction D5 from the fixed portion 10F to the fifth electrode 55 is along the first plane PL1. The sixth direction D6 from the fixed portion 10F to the sixth electrode 56 is along the first plane PL1 and crosses the fifth direction D5. A seventh direction D7 from the fixed portion 10F to the seventh electrode 57 is along the first plane PL1. An eighth direction D8 from the fixed portion 10F to the eighth electrode 58 is along the first plane PL1 and crosses the seventh direction D7.

The circuit section 70 may be configured to supply the first signal Sg1 to at least one of the fifth electrode 55, the sixth electrode 56, the seventh electrode 57, and the eighth electrode 58 to adjust the vibration state of the movable portion 10M. In this example, the circuit section 70 supplies the first adjustment voltage Vp1 to the fifth electrode 55. The circuit section 70 supplies the second adjustment voltage Vp2 to the sixth electrode 56. The circuit section 70 supplies a third adjustment voltage Vp3 to the seventh electrode 57. The circuit section 70 supplies a fourth adjustment voltage Vp4 is supplied to the eighth electrode 58.

The first signal Sg1 (first adjusted voltage Vp1, second adjusted voltage Vp2, third adjusted voltage Vp3, and fourth adjusted voltage Vp4) may be supplied from the second circuit 75b. By these adjustment voltages, electrostatic tuning is performed.

The circuit section 70 may be configured to supply the first signal Sg1 such that the difference between the vibration characteristic in the first direction D1 in the vibration state and the vibration characteristic in the first crossing direction Dc1 in the vibration state becomes small. The first crossing direction Dc1 crosses first direction D1 along the first plane PL1.

In embodiments, bias stability is improved, for example, by electrostatic tuning and optimization of vibration direction.

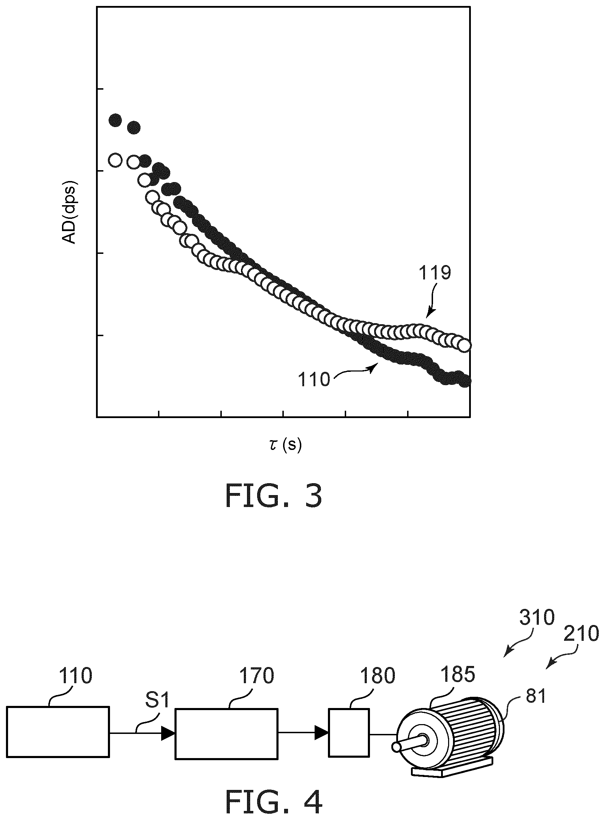

FIG. 3 is a graph illustrating the characteristics of the sensor.

FIG. 3 illustrates the characteristics of a sensor 119 of the reference example and the characteristics of the sensor 110 according to the embodiment. In the sensor 119, the first non-inverting input 71b and the second non-inverting input 72b are set to the same potential. The horizontal axis of the figures is time τ(s). The vertical axis of the figures is Allan dispersion AD (dps: degrees per second). It is preferable that the Allan dispersion AD is small. As shown in FIG. 3, in the region where the time τ is long, the Allan dispersion AD in the sensor 110 is smaller than the Allan dispersion AD in the sensor 119. In sensor 110, highly stable detection is possible.

### (Second Embodiment)

A second embodiment relates to an electronic device.

FIG. 4 is a schematic diagram illustrating an electronic device according to a second embodiment.

As shown in FIG. 4, the electronic device 310 according to the embodiment includes the sensor (for example, the sensor 110) according to the first embodiment and the circuit controller 170. The circuit controller 170 can control a circuit 180 based on a signal S1 obtained from the sensor. The circuit 180 is, for example, a control circuit for the drive device 185. According to the embodiment, for example, the circuit 180 the like for controlling the drive device 185 can be controlled with high accuracy.

As shown in FIG. 4, the sensor system 210 according to the embodiment includes the sensor according to the first embodiment (for example, the sensor 110) and a detection target member 81. The sensor 110 is fixed to the detection target member 81. The sensor 110 can detect a signal from the detection target member 81.

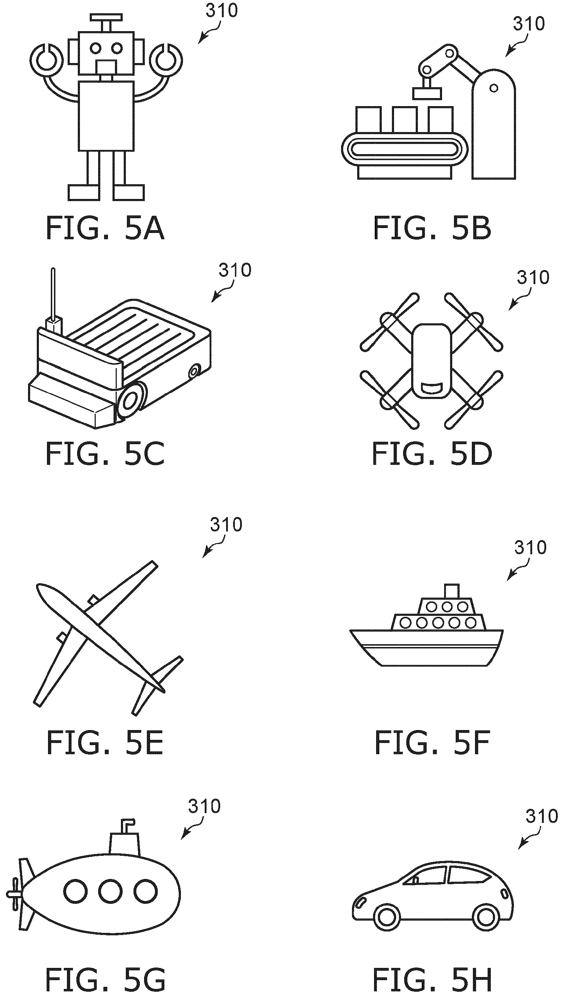

FIGS. 5A to 5H are schematic views illustrating applications of the electronic device according to the embodiment.

As shown in FIG. 5A, the electronic device 310 may be at least a portion of a robot. As shown in FIG. 5B, the electronic device 310 may be at least a portion of a machining robot provided in a manufacturing plant, etc. As shown in FIG. 5C, the electronic device 310 may be at least a portion of an automatic guided vehicle inside a plant, etc. As shown in FIG. 5D, the electronic device 310 may be at least a portion of a drone (an unmanned aircraft). As shown in FIG. 5E, the electronic device 310 may be at least a portion of an airplane. As shown in FIG. 5F, the electronic device 310 may be at least a portion of a ship. As shown in FIG. 5G, the electronic device 310 may be at least a portion of a submarine. As shown in FIG. 5H, the electronic device 310 may be at least a portion of an automobile. The electronic device 310 may include, for example, at least one of a robot or a moving body.

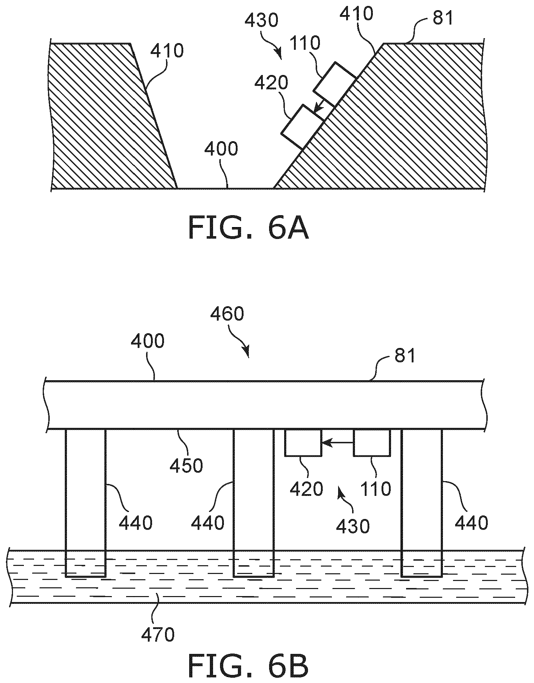

FIGS. 6A and 6B are schematic views illustrating applications of the sensor according to the embodiment.

As shown in FIG. 6A, a sensor 430 according to the fifth embodiment includes the sensor according to the first embodiment, and a transmission/reception part 420. In the example of FIG. 6A, the sensor 110 is illustrated as the sensor. The transmission/reception part 420 is configured to transmit the signal obtained from the sensor 110 by, for example, at least one of wireless and wired methods. The sensor 430 is provided on, for example, a slope surface 410 such as a road 400. The sensor 430 can monitor the state of, for example, a facility (e.g., infrastructure). The sensor 430 may be, for example, a state monitoring device.

For example, the sensor 430 detects a change in the state of a slope surface 410 of a road 400 with high accuracy. The change in the state of the slope surface 410 includes, for example, at least one of a change in the inclination angle and a change in the vibration state. The signal (inspection result) obtained from the sensor 110 is transmitted by the transmission/reception part 420. The status of a facility (e.g., infrastructure) can be monitored, for example, continuously.

As shown in FIG. 6B, the sensor 430 is provided, for example, in a portion of a bridge 460. The bridge 460 is provided above the river 470. For example, the bridge 460 includes at least one of a main girder 450 and a pier 440. The sensor 430 is provided on at least one of the main girder 450 and the pier 440. For example, at least one of the angles of the main girder 450 and the pier 440 may change due to deterioration or the like. For example, the vibration state may change in at least one of the main girder 450 and the pier 440. The sensor 430 detects these changes with high accuracy. The detection result can be transmitted to an arbitrary place by the transmission/reception part 420. Abnormalities can be detected effectively.

According to the embodiments, a sensor and an electronic device capable of improving detection accuracy can be provided.

In the specification of the application, "perpendicular" and "parallel" refer to not only strictly perpendicular and strictly parallel but also include, for example, the fluctuation due to manufacturing processes, etc. It is sufficient to be substantially perpendicular and substantially parallel.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in the sensor such as element sections, bases, fixed portions, movable portions, fixed electrode, circuit sections, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all sensors and all electronic devices practicable by an appropriate design modification by one skilled in the art based on the sensors and the electronic devices described above as embodiments of the invention also are within the scope of the invention to the extent that the purport of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made; The scope of the invention is defined by the appended claims.

## Claims

1. A sensor (110), comprising:
an element section (10E) including,
a base (10s) including a base face (10f),
a fixed portion (10F) fixed to the base face (10f),
a movable portion (10M) supported by the fixed portion (10F), a first gap (G1) being provided between the base face (10f) and the movable portion (10M), and
a plurality of fixed electrodes fixed to the base face (10f) and facing the movable portion (10M); and
a circuit section (70),
the plurality of fixed electrodes including a first electrode (51) and a second electrode (52),
a first direction (D1) from the fixed portion (10F) to the first electrode (51) being along a first plane (PL1) along the base face (10f),
a second direction (D2) from the fixed portion (10F) to the second electrode (52) being along the first plane (PL1) and being inclined with respect to the first direction (D1),
the circuit section (70) including a first charge amplifier (71) and a second charge amplifier (72),
the first charge amplifier (71) including a first operational amplifier (71A) including a first inverting input (71a) and a first non-inverting input (71b),
the first inverting input (71a) being electrically connected to the first electrode (51),
the first non-inverting input (71b) being set to a first potential (E1),
the second charge amplifier (72) including a second operational amplifier (72A) including a second inverting input (72a) and a second non-inverting input (72b),
the second inverting input (72a) being electrically connected to the second electrode (52),
the second non-inverting input (72b) being set to a second potential (E2) different from the first potential (E1), and
the circuit section (70) being configured to detect an angular velocity of an external force applied to the element section (10E) by processing a change in a vibration state of the movable portion (10M) due to the external force using a first value (As1) based on a first output (Va1) of the first charge amplifier (71) and a second output (Va2) of the second charge amplifier (72);
wherein
the circuit section (70) further includes a processing circuit (73),
the processing circuit (73) is configured to output a first ratio and a second ratio,
the first ratio is a ratio of the first output (Va1) to the first potential (E1),
the second ratio is a ratio of the second output (Va2) to the second potential (E2), and
the first value (As1) is a function of the first ratio and the second ratio.

2. The sensor (110) according to claim 1, wherein
the plurality of fixed electrodes further include a third electrode (53) and a fourth electrode (54),
a third direction (D3) from the fixed portion (10F) to the third electrode (53) is along the first plane (PL1),
a fourth direction (D4) from the fixed portion (10F) to the fourth electrode (54) is along the first plane (PL1) and crosses the third direction (53),
the circuit section (70) further includes a first circuit (75a), and
the first circuit (75a) is configured to supply an AC signal to at least one of the third electrode (53) or the fourth electrode (54) to vibrate the movable portion (10M).

3. The sensor (110) according to claim 2, wherein
the circuit section (70) further includes a second circuit (75b), and
the second circuit (75b) is configured to control the first circuit (75a) based on the first value (As1) so as to return the vibration state to when the external force is not applied.

4. The sensor (110) according to claim 2, wherein
in a first vibration state in which the external force is not applied to the element section (10E), the movable portion (10M) vibrates along a first vibration direction;
in a second vibration state in which the external force is applied to the element section (10E), the vibration state includes a component in a second vibration direction crossing the first vibration direction, and
the circuit section (70) is configured to adjust the AC signal using the first value (As1) so as to return the second vibration state to the first vibration state.

5. The sensor (110) according to claim 4, wherein
the circuit section (70) is configured to detect the angular velocity based on a change in the AC signal for the adjustment.

6. The sensor (110) according to any one of claims 2-5, wherein
the movable portion (10M) is provided between the fixed portion (10F) and the first electrode (51), between the fixed portion (10F) and the second electrode (52), between the fixed portion (10F) and the third electrode (53), and between the fixed portion (10F) and the fourth electrode (54).

7. The sensor (110) according to claim 6, wherein
the movable portion (10M) is provided around the fixed portion (10F) along the first plane (PL1).

8. The sensor according to any one of claims 1-5, wherein
the movable portion (10M) includes a plurality of concentric annular portions (10n) centered on the fixed portion (10F).

9. The sensor (110) according to claim 8, wherein
the movable portion (10M) includes a radial portion (10x) continuous with at least two of the plurality of annular portions (10n),
the radial portion (10x) extends along a first radial direction (Dx1) along the first plane (PL1), and
the first radial direction (Dx1) passes through a center of the fixed portion (10F) in the first plane (PL1).

10. The sensor (110) according to any one of claims 1-9, wherein
the circuit section (70) is configured to vibrate the movable portion (10M) along the first direction (D1) when the external force is not applied to the element section (10E).

11. The sensor (110) according to any one of claims 1-9, wherein
the first potential (E1) and the second potential (E2) are positive,
the first potential (E1) is lower than the second potential (E2), and
the first ratio is higher than the second ratio.

12. The sensor (110) according to any one of claims 2-9, wherein
the third direction (D3) is inclined with respect to the first direction (D1), and
the fourth direction (D4) is inclined with respect to the third direction (D3).

13. An electronic device (310), comprising:
the sensor (110) according to any one of claim 1-12; and
a circuit controller (170) configured to control a circuit (180) based on a signal obtained from the sensor (110).

## Patentansprüche

1. Sensor (110), umfassend:
einen Elementabschnitt (10E), der Folgendes einschließt:
eine Basis (10s), die eine Basisfläche (10f) einschließt,
einen feststehenden Abschnitt (10F), der an der Basisfläche (10f) befestigt ist,
einen bewegbaren Abschnitt (10M), der durch den feststehenden Abschnitt (10F) getragen wird, wobei zwischen der Basisfläche (10f) und dem bewegbaren Abschnitt (10M) ein erster Spalt (G1) bereitgestellt ist, und
eine Vielzahl von feststehenden Elektroden, die an der Basisfläche (10f) befestigt und dem bewegbaren Abschnitt (10M) zugewandt sind; und
einen Schaltungsabschnitt (70),
wobei eine Vielzahl von feststehenden Elektroden eine erste Elektrode (51) und eine zweite Elektrode (52) einschließen,
wobei eine erste Richtung (D1) vom feststehenden Abschnitt (10F) zur ersten Elektrode (51) entlang einer ersten Ebene (PL1) entlang der Basisfläche (10f) verläuft,
wobei eine zweite Richtung (D2) vom feststehenden Abschnitt (10F) zur zweiten Elektrode (52) entlang der ersten Ebene (PL1) verläuft und in Bezug auf die erste Richtung (D1) geneigt ist,
wobei der Schaltungsabschnitt (70) einen ersten Ladungsverstärker (71) und einen zweiten Ladungsverstärker (72) einschließt,
wobei der erste Ladungsverstärker (71) einen ersten Operationsverstärker (71A) einschließt, der einen ersten invertierenden Eingang (71a) und einen ersten nichtinvertierenden Eingang (71b) aufweist,
wobei der erste invertierende Eingang (71a) mit der ersten Elektrode (51) elektrisch verbunden ist,
wobei der erste nichtinvertierende Eingang (71b) auf ein erstes Potential (E1) eingestellt ist,
wobei der zweite Ladungsverstärker (72) einen zweiten Operationsverstärker (72A) einschließt, der einen zweiten invertierenden Eingang (72a) und einen zweiten nichtinvertierenden Eingang (72b) aufweist,
wobei der zweite invertierende Eingang (72a) mit der zweiten Elektrode (52) elektrisch verbunden ist,
wobei der zweite nichtinvertierende Eingang (72b) auf ein zweites Potential (E2) eingestellt ist, das sich vom ersten Potential (E1) unterscheidet, und
wobei der Schaltungsabschnitt (70) dafür konfiguriert ist, eine Winkelgeschwindigkeit einer auf den Elementabschnitt (10E) ausgeübten Kraft durch Verarbeiten einer Änderung eines Schwingungszustands des bewegbaren Teils (10M) aufgrund der äußeren Kraft unter Verwendung eines ersten Werts (As1), der auf einem ersten Ausgang (Va1) des ersten Ladungsverstärkers (71) und einem zweiten Ausgang (Va2) des zweiten Ladungsverstärkers (72) beruht, zu ermitteln; wobei:
der Schaltungsabschnitt (70) ferner eine Verarbeitungsschaltung (73) einschließt,
die Verarbeitungsschaltung (73) dafür konfiguriert ist, ein erstes Verhältnis und ein zweites Verhältnis auszugeben,
das erste Verhältnis ein Verhältnis des ersten Ausgangs (Va1) zum ersten Potential (E1) ist,
das zweite Verhältnis ein Verhältnis des zweiten Ausgangs (Va2) zum zweiten Potential (E2) ist, und
der erste Wert (As1) eine Funktion des ersten Verhältnisses und des zweiten Verhältnisses ist.

2. Sensor (110) nach Anspruch 1, wobei:
die Vielzahl von feststehenden Elektroden ferner eine dritte Elektrode (53) und eine vierte Elektrode (54) einschließt,
eine dritte Richtung (D3) vom feststehenden Abschnitt (10F) zur dritten Elektrode (53) entlang der ersten Ebene (PL1) verläuft,
eine vierte Richtung (D4) vom feststehenden Abschnitt (10F) zur vierten Elektrode (54) entlang der ersten Ebene (PL1) verläuft und die dritte Richtung (D3) schneidet,
der Schaltungsabschnitt (70) ferner eine erste Schaltung (75a) einschließt, und
die erste Schaltung (75a) dafür konfiguriert ist, mindestens einer der dritten Elektrode (53) oder der vierten Elektrode (54) ein Wechselstromsignal zuzuführen, um den bewegbaren Abschnitt (10M) in Schwingung zu versetzen.

3. Sensor (110) nach Anspruch 2, wobei:
der Schaltungsabschnitt (70) ferner eine zweite Schaltung (75b) einschließt, und
die zweite Schaltung (75b) dafür konfiguriert ist, die erste Schaltung (75a) auf der Grundlage des ersten Werts (As1) so zu steuern, dass der Schwingungszustand in den Zustand zurückversetzt wird, in dem die äußere Kraft nicht ausgeübt wird.

4. Sensor (110) nach Anspruch 2, wobei:
in einem ersten Schwingungszustand, in dem die äußere Kraft nicht auf den Elementabschnitt (10E) ausgeübt wird, der bewegbare Abschnitt (10M) entlang einer ersten Schwingungsrichtung schwingt;
in einem zweiten Schwingungszustand, in dem die äußere Kraft auf den Elementabschnitt (10E) ausgeübt wird, der Schwingungszustand eine Komponente in einer zweiten Schwingungsrichtung, welche die erste Schwingungsrichtung schneidet, einschließt, und
der Schaltungsabschnitt (70) dafür konfiguriert ist, das Wechselstromsignal unter Verwendung des ersten Werts (As1) so nachzuregeln, dass der zweite Schwingungszustand in den ersten Schwingungszustand zurückversetzt wird.

5. Sensor (110) nach Anspruch 4, wobei:
der Schaltungsabschnitt (70) dafür konfiguriert ist, die Winkelgeschwindigkeit auf der Grundlage einer Änderung des Wechselstromsignals für die Nachregelung zu ermitteln.

6. Sensor (110) nach einem der Ansprüche 2-5, wobei:
der bewegbare Abschnitt (10M) zwischen dem feststehenden Abschnitt (10F) und der ersten Elektrode (51), zwischen dem feststehenden Abschnitt (10F) und der zweiten Elektrode (52), zwischen dem feststehenden Abschnitt (10F) und der dritten Elektrode (53) und zwischen dem feststehenden Abschnitt (10F) und der vierten Elektrode (54) bereitgestellt ist.

7. Sensor (110) nach Anspruch 6, wobei:
der bewegbare Abschnitt (10M) rings um den feststehenden Abschnitt (10F) entlang der ersten Ebene (PL1) bereitgestellt ist.

8. Sensor nach einem der Ansprüche 1-5, wobei:
der bewegbare Abschnitt (10M) eine Vielzahl von konzentrischen ringförmigen Abschnitten (10n), die auf dem feststehenden Abschnitt (10F) zentriert ist, einschließt.

9. Sensor (110) nach Anspruch 8, wobei:
der bewegbare Abschnitt (10M) einen radialen Abschnitt (10x) einschließt, der an mindestens zwei der Vielzahl von ringförmigen Abschnitten (10n) anschließt,
der radiale Abschnitt (10x) sich entlang einer ersten radialen Richtung (Dx1) entlang der ersten Ebene (PL1) erstreckt, und
die erste radiale Richtung (Dx1) durch einen Mittelpunkt des feststehenden Abschnitts (10F) in der ersten Ebene (PL1) verläuft.

10. Sensor (110) nach einem der Ansprüche 1-9, wobei:
der Schaltungsabschnitt (70) dafür konfiguriert ist, den bewegbaren Abschnitt (10M) entlang der ersten Richtung (D1) in Schwingung zu versetzen, wenn die äußere Kraft nicht auf den Elementabschnitt (10E) ausgeübt wird.

11. Sensor (110) nach einem der Ansprüche 1-9, wobei:
das erste Potential (E1) und das zweite Potential (E2) positiv sind,
das erste Potential (E1) niedriger als das zweite Potential (E2) ist, und
das erste Verhältnis höher als das zweite Verhältnis ist.

12. Sensor (110) nach einem der Ansprüche 2 bis 9, wobei:
die dritte Richtung (D3) in Bezug auf die erste Richtung (D1) geneigt ist, und
die vierte Richtung (D4) in Bezug auf die dritte Richtung (D3) geneigt ist.

13. Elektronische Vorrichtung (310), umfassend:
den Sensor (110) nach einem der Ansprüche 1-12; und
eine Schaltungssteuereinheit (170), die dafür konfiguriert ist, eine Schaltung (180) auf der Grundlage eines vom Sensor (110) erhaltenen Signals zu steuern.

## Revendications

1. Capteur (110), comprenant :
une section d'élément (10E) incluant
une base (10s) incluant une face de base (10f),
une première portion fixe (10s) fixée à la face de base (10f),
une portion mobile (10M) supportée par la première portion fixe (10F), un premier espace (G1) étant fourni entre la face de base (10f) et la portion mobile (10M) ; et
une pluralité d'électrodes fixes fixées à la face de base (10f) et faisant face à la portion mobile (10M) ; et
une section de circuit (70),
la pluralité d'électrodes fixes incluant une première électrode (51) et une deuxième électrode (52),
une première direction (D1) à partir de la portion fixe (10F) à la première électrode (51) étant le long d'un premier plan (PL1) le long de la face de base (10f),
une deuxième direction (D2) à partir de la portion fixe (10F) à la deuxième électrode (52) étant le long du premier plan (PL1) et étant inclinée par rapport à la première direction (D1),
la section de circuit (70) incluant un premier amplificateur de charge (71) et un deuxième amplificateur de charge (72),
le premier amplificateur de charge (71) incluant un premier amplificateur opérationnel (71A) incluant une première entrée inverseuse (71a) et une première entrée non inverseuse (71b),
la première entrée inverseuse (71a) étant connectée électriquement à la première électrode (51),
la première entrée non inverseuse (71b) étant réglée à un premier potentiel (E1),
le deuxième amplificateur de charge (72) incluant un deuxième amplificateur opérationnel (72A) incluant une deuxième entrée inverseuse (72a) et une deuxième entrée non inverseuse (72b),
la deuxième entrée inverseuse (72a) étant électriquement connectée à la deuxième électrode (52),
la deuxième entrée non inverseuse (72b) étant réglée sur un deuxième potentiel (E2) différent du premier potentiel (E1), et
la section de circuit (70) étant configurée pour détecter une vitesse angulaire d'une force externe appliquée à la section d'élément (10E) en traitant un changement d'un état de vibration de la portion mobile (10M) due à la force externe en utilisant une première valeur (As1) basée sur une première sortie (Va1) du premier amplificateur de charge (71) et une deuxième sortie (Va2) du deuxième amplificateur de charge (72) ; dans lequel
la section de circuit (70) inclut en outre un circuit de traitement (73),
le circuit de traitement (73) est configuré pour émettre un premier rapport et un deuxième rapport,
le premier rapport est un rapport entre la première sortie (Va1) et le premier potentiel (E1),
le deuxième rapport est un rapport entre la deuxième sortie (Va2) et le deuxième potentiel (E2), et
la première valeur (As1) est une fonction du premier rapport et du deuxième rapport.

2. Capteur (110) selon la revendication 1, dans lequel
la pluralité d'électrodes fixes inclut en outre une troisième électrode (53) et une quatrième électrode (54),
une troisième direction (D3) à partir de la portion fixe (10F) à la troisième électrode (53) est le long du premier plan (PL1),
une quatrième direction (D4) à partir de la portion fixe (10F) à la quatrième électrode (54) est le long du premier plan (PL1) et croise la troisième direction (53),
la section de circuit (70) inclut en outre un premier circuit (75a), et
le premier circuit (75a) est configuré pour fournir un signal de CA à au moins une parmi la troisième électrode (53) ou la quatrième électrode (54) pour faire vibrer la portion mobile (10M).

3. Capteur (110) selon la revendication 2, dans lequel
la section de circuit (70) inclut en outre un deuxième circuit (75b), et
le deuxième circuit (75b) est configuré pour commander le premier circuit (75a) sur la base de la première valeur (As1) de manière à ramener l'état de vibration à celui où la force externe n'est pas appliquée.

4. Capteur (110) selon la revendication 2, dans lequel
dans un premier état de vibration dans lequel la force externe n'est pas appliquée à la section d'élément (10E), la portion mobile (10M) vibre le long d'une première direction de vibration ;
dans un deuxième état de vibration dans lequel la force extérieure est appliquée à la section d'élément (10E), l'état de vibration inclut une composante dans une deuxième direction de vibration croisant la première direction de vibration, et
la section de circuit (70) est configurée pour ajuster le signal de CA en utilisant la première valeur (As1) de manière à ramener le deuxième état de vibration au premier état de vibration.

5. Capteur (110) selon la revendication 4, dans lequel
la section de circuit (70) est configurée pour détecter la vitesse angulaire sur la base d'un changement dans le signal de CA pour l'ajustement.

6. Capteur (110) selon l'une quelconque des revendications 2-5, dans lequel
la portion mobile (10M) est fournie entre la portion fixe (10F) et la première électrode (51), entre la portion fixe (10F) et la deuxième électrode (52), entre la portion fixe (10F) et la troisième électrode (53), et entre la portion fixe (10F) et la quatrième électrode (54).

7. Capteur (110) selon la revendication 6, dans lequel
la portion mobile (10M) est fournie autour de la portion fixe (10F) le long du premier plan (PL1).

8. Capteur selon l'une quelconque des revendications 1-5, dans lequel
la portion mobile (10M) inclut une pluralité de portions annulaires concentriques (10n) centrées sur la portion fixe (10F).

9. Capteur (110) selon la revendication 8, dans lequel
la portion mobile (10M) inclut une portion radiale (10x) continue avec au moins deux parmi la pluralité de portions annulaires (10n),
la portion radiale (10x) s'étend le long d'une première direction radiale (Dx1) le long du premier plan (PL1), et
la première direction radiale (Dx1) passe à travers un centre de la portion fixe (10F) dans le premier plan (PL1).

10. Capteur (110) selon l'une quelconque des revendications 1-9, dans lequel
la section de circuit (70) est configurée pour faire vibrer la portion mobile (10M) le long de la première direction (D1) lorsque la force externe n'est pas appliquée à la section d'élément (10E).

11. Capteur (110) selon l'une quelconque des revendications 1-9, dans lequel
le premier potentiel (E1) et le deuxième potentiel (E2) sont positifs,
le premier potentiel (E1) est inférieur au deuxième potentiel (E2), et
le premier rapport est supérieur au deuxième rapport.

12. Capteur (110) selon l'une quelconque des revendications 2-9, dans lequel
la troisième direction (D3) est inclinée par rapport à la première direction (D1), et
la quatrième direction (D4) est inclinée par rapport à la troisième direction (D3).

13. Dispositif électronique (310), comprenant :
le capteur (110) selon l'une quelconque des revendications 1-12 ; et
un dispositif de commande de circuit (170) configuré pour commander un circuit (180) sur la base d'un signal obtenu à partir du capteur (110).
